# EUROPEAN PATENT APPLICATION

(11) **EP 1 695 817 A1**
(43) Date of publication of application: **30.08.2006**
(21) Application number: 04807631.9
(22) Date of filing: 16.12.2004
(51) Int. Cl.: B32B 27/34

(54) **MULTILAYER STRUCTURE AND MULTILAYER FORMED ARTICLE**

(30) Priority: 17.12.2003 JP 2003419519
(71) Applicant: Ube Industries, Ltd., Ube-shi, Yamaguchi-ken 755-8633 (JP); KURARAY CO., LTD., Kurashiki-shi, Okayama 710-8622 (JP)
(72) Inventor: NISHIOKA, Tomoharu, c/o Ube Chemical Factory, Ube-shi, Yamaguchi 7558633 (JP); NAKAMURA, Koji, c/o Ube Chemical Factory, Ube-shi, Yamaguchi 7558633 (JP); UCHIDA, Koichi, c/o KURARAY CO., LTD., Tsukuba-shi, Ibaraki 3050841 (JP); KASHIMURA, Tsugunori, c/o KURARAY CO., LTD., Tokyo 1008115 (JP)
(74) Representative: Hoeger, Stellrecht & Partner Patentanwälte
(86) International application number: PCT/JP2004/019274
(87) International publication number: WO 2005/058600

(57) **Abstract**

A multilayer structure comprising at least two or more layers including a layer (a) comprising (A) polyamide 11 and/or polyamide 12, and a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units. A multilayer structure excellent in the alcohol gasoline permeation-preventing properties, interlayer adhesion, low-temperature impact resistance and heat resistance is provided.

## Description

### TECHNICAL FIELD

The present invention relates to a structure obtained by stacking a layer comprising a polyamide-based resin (e.g., polyamide 11, 12) and a layer comprising a semi-aromatic polyamide having a specific structural unit. More specifically, the present invention relates to a multilayer structure and a multilayer shaped article, which are excellent in an alcohol gasoline permeation-preventing property, in interlayer adhesion, in low-temperature impact resistance, in heat resistance and in chemical resistance.

### BACKGROUND ART

In the field of automobile-related fuel tubes, hoses, tanks and the like, formation of lightweight constituent parts of an automobile is proceeding and the main material for these parts is changing from metal to resin in view of the rusting due to anti-freezing agents on roads or the recent issue of energy saving. For example, a saturated polyester-based resin, a polyolefin-based resin, a polyamide-based resin and a thermoplastic polyurethane-based resin are used. However, a single-layer shaped article using such a resin is insufficient in the heat resistance, chemical resistance and the like and, therefore, the application thereof is limited.

Furthermore, from the standpoint of preventing environmental pollution, strict regulations regarding exhaust gas have been recently implemented, including preventing volatile hydrocarbons or the like from leaking out into the air by diffusion through a fuel tube, a hose or a tank bulkhead. The regulations will become more and more strict in the future and it is desired to maximally prevent the fuel from permeating and evaporating through the fuel tube, hose or tank bulkhead. Also, from the standpoint of reducing gasoline consumption and attaining higher performance, an oxygen-containing gasoline having blended therein alcohols having a low boiling point, such as methanol and ethanol, or ethers such as methyl-tert-butyl ether (MTBE), is being used. However, the permeation of this fuel cannot be satisfactorily prevented in a shaped article using a conventional polyamide-based resin alone, particularly polyamide 11 or polyamide 12 excellent in the strength, toughness, chemical resistance and flexibility. Thus, an improvement is required in the prevention, particularly, of alcohol gasoline permeation.

In order to more successfully prevent the permeation of alcohol gasoline, the wall thickness must be increased, but this incurs problems that the shaped article decreases in the flexibility or becomes heavy and furthermore, the material or production cost increases.

As a method for solving this problem, there has been proposed a multilayer structure having disposed therein a resin having good alcohol gasoline permeation-preventing property, such as ethylene-vinyl acetate copolymer saponified product (EVOH), polymethaxylyleneadipamide (polyamide MXD6), polybutylene terephthalate (PBT), polyethylene naphthalate (PEN), polybutylene naphthalate (PBN), polyvinylidene fluoride (PVDF), ethylene/tetrafluoroethylene copolymer (ETFE), ethylene/chlorotrifluoroethylene copolymer (ECTFE), tetrafluoroethylene/hexafluoropropylene copolymer (TFE/HFP, FEP) and tetrafluoroethylene/hexafluoropropylene/vinylidene fluoride copolymer (TFE/HFP/VDF, THV) (see, for example, Japanese Unexamined Patent Publication (Kohyo) No. 7-507739).

The ethylene/vinyl acetate copolymer saponified product (EVOH), polymethaxylyleneadipamide (polyamide MXD6) and the like are known to have good adhesive strength to polyamide 6, but the interlayer adhesion is insufficient for polyamide 11 or polyamide 12 which has been conventionally used as a single-layer shaped article and it is necessary to provide an adhesive layer between layers or apply a specific surface treatment between layers.

On the other hand, the polyester-based resin or fluorine-based resin has a low adhesive property to a polyamide-based resin, and there has been proposed a technique of using a mixture of a polyester-based or fluorine-containing resin and a polyamide-based resin for the adhesive resin interposed between layers. However, the interlayer adhesion is affected by the morphology of the mixture used as the adhesive resin and this gives rise to a problem that the interlayer adhesion is greatly dispensed or decreased depending on the extrusion conditions, environmental conditions on use, or the like.

As for the adhesive resin, a maleic anhydride-modified polyolefin resin and the like are known, but the thermal aging resistance of these resins is inferior to that of the polyamide resin used and such a resin cannot be used in severe conditions. Also, an increase in the number of layers disadvantageously incurs problems in view of cost and process control.

An object of the present invention is to solve these problems and provide a multilayer structure excellent in the alcohol gasoline permeation-preventing properties, in interlayer adhesion, in low-temperature impact resistance and in heat resistance.

### DISCLOSURE OF THE INVENTION

As a result of intensive investigations to solve those problems, the present inventors have found that a multilayer structure obtained by stacking a layer comprising a semi-aromatic polyamide having a specific structure and a layer comprising polyamide 11 and/or polyamide 12 ensures both the interlayer adhesion and the alcohol gasoline permeation-preventing property and satisfies various properties such as low-temperature impact resistance and heat resistance.

More specifically, the present invention relates to a multilayer structure comprising at least two or more layers including a layer (a) comprising (A) polyamide 11 and/or polyamide 12, and a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units.

Also, the present invention relates to a multilayer structure comprising at least three or more layers including a layer (a) comprising (A) polyamide 11 and/or polyamide 12, a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units, and a layer (c) comprising (A) polyamide 11 and/or polyamide 12 or (C) polyamide 6.

### BRIEF DESCRIPTION OF THE DRAWING

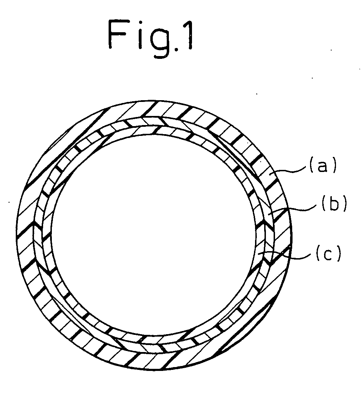

Fig. 1 is a transverse cross-sectional view of a multilayer tube of Example 1.

### BEST MODE FOR CARRYING OUT THE INVENTION

The present invention is described in detail below.

The (A) polyamide 11 for use in the present invention is representatively a polyamide having an acid amide bond (-CONH-), represented by the formula: (-CO-(CH₂)₁₀-NH-)ₙ, and this polyamide can be obtained by polymerizing 11-aminoundecanoic acid or undecanelactam. The polyamide 12 is representatively a polyamide having an acid amide bond (-CONH-), represented by the formula: (-CO-(CH₂)₁₁-NH-)ₙ, and this polyamide can be obtained by polymerizing 12-aminododecanoic acid or dodecanelactam.

The (C) polyamide 6 for use in the present invention is representatively a polyamide having an acid amide bond (-CONH-), represented by the formula: (-CO-(CH₂)₅-NH-)ₙ, and this polyamide can be obtained by polymerizing ε-caprolactam or 6-aminocaproic acid.

The (A) polyamide 11 and/or polyamide 12 and the (C) polyamide 6 each may be a copolymer mainly comprising the above-described monomer (60 wt% or more). Examples of the copolymerization component include a lactam, an aminocarboxylic acid, and a nylon salt comprising diamine and dicarboxylic acid.

Examples of the lactam include ε-caprolactam (excluding polyamide 6), enantholactam, undecanelactam (excluding polyamide 11), dodecanelactam (excluding polyamide 12), α-pyrrolidone and α-piperidone. Examples of the aminocarboxylic acid include 6-aminocaproic acid (excluding polyamide 6), 7-aminoheptanoic acid, 9-aminononanoic acid, 11-aminoundecanoic acid (excluding polyamide 11) and 12-aminododecanoic acid (excluding polyamide 12).

Examples of the diamine constituting the nylon salt include an aliphatic diamine such as ethylenediamine, propylenediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2/3-methyl-1,5-pentanediamine, 2-methyl-1,8-octanediamine, 2,2,4/2,4,4-trimethyl-1,6-hexanediamine and 5-methyl-1,9-nonanediamine; an alicyclic diamine such as 1,3/1,4-cyclohexanediamine, 1,3/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethylamine and tricyclodecanedimethylamine; and an aromatic diamine such as p-xylenediamine and m-xylenediamine.

Examples of the dicarboxylic acid constituting the nylon salt include an aliphatic dicarboxylic acid such as adipic acid, pimelic acid, suberic acid, azelaic acid, sebacic acid, undecanedicarboxylic acid, dodecanedicarboxylic acid, tridecanedicarboxylic acid, tetradecanedicarboxylic acid, pentadecanedicarboxylic acid, hexadecanedicarboxylic acid, octadecanedicarboxylic acid and eicosanedicarboxylic acid; an alicyclic dicarboxylic acid such as 1,3/1,4-cyclohexanedicarboxylic acid, dicyclohexylmethane-4,4'-dicarboxylic acid and norbornanedicarboxylic acid; and an aromatic dicarboxylic acid such as terephthalic acid, isophthalic acid and 1,4/2,6/2,7-naphthalenedicarboxylic acid.

The (A) polyamide 11 and/or polyamide 12 and the (C) polyamide 6 for use in the present invention each may be a homopolymer, a mixture with the above-described copolymer, or a mixture with other polyamide-based resins or other thermoplastic resins. In the mixture, the content of the polyamide 11 and/or polyamide 12 or polyamide 6 is preferably 60 wt% or more.

Examples of the other polyamide resin system include polyethyleneadipamide (polyamide 26), polytetramethyleneadipamide (polyamide 46), polyhexamethyleneadipamide (polyamide 66), polyhexamethyleneazelamide (polyamide 69), polyhexamethylenesebacamide (polyamide 610), polyhexamethyleneundecamide (polyamide 611), polyhexamethylenedodecamide (polyamide 612), polyhexamethyleneterephthalamide (polyamide 6T), polyhexamethyleneisophthalamide (polyamide 6I), polynonamethylenedodecamide (polyamide 912), polydecamethylenedodecamide (polyamide 1012), polydodecamethylenedodecamide (polyamide 1212), polymethaxylyleneadipamide (polyamide MXD6), polytrimethylhexamethyleneterephthalamide (polyamide TMHT), polybis(4-aminocyclohexyl)methanedodecamide (polyamide PACM12), polybis(3-methyl-4-aminocyclohexyl)methanedodecamide (polyamide dimethyl PACM12), polynonamethyleneterephthalamide (polyamide 9T), polydecamethyleneterephthalamide (polyamide 10T), polyundecamethyleneterephthalamide (polyamide 11T), polydodecamethyleneterephthalamide (polyamide 12T), polynonamethylenehexahydroterephthalamide (polyamide 9T(H)), polydecamethylenehexahydroterephthalamide (polyamide 10T(H)), polyundecamethylenehexahydroterephthalamide (polyamide 11T(H)), polydodecamethylenehexahydroterephthalamide (polyamide 12T(H)), and a copolymer using several kinds of these polyamide raw material monomers.

Examples of the other thermoplastic resin include a polyolefin-based resin such as high-density polyethylene (HDPE), low-density polyethylene (LDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate (EEA); the above-described polyolefin-based resin where a functional group such as carboxyl group or its salt, acid anhydride group and epoxy group is incorporated; a polyester-based resin such as polybutylene terephthalate (PBT), polyethylene terephthalate (PET), polyethylene isophthalate (PEI), PET/PEI copolymer, polyarylate (PAR), polyethylene naphthalate (PEN), polybutylene naphthalate (PBN) and liquid crystal polyester; a polyether-based resin such as polyacetal (POM) and polyphenylene oxide (PPO); a polysulfone-based resin such as polysulfone (PSF) and polyether sulfone (PES); a polythioether-based resin such as polyphenylene sulfide (PPS) and polythioethersulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl-based resin such as polyvinyl alcohol (PVA), polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; a fluorine-containing resin such as polyvinylidene fluoride (PVDF), polyvinyl fluoride (PVF), polychlorofluoroethylene (PCTFE), tetrafluoroethylene/ethylene copolymer (ETFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkylvinylether) copolymer (PFA); a polyimide-based resin such as thermoplastic polyimide (PI), polyamideimide (PAI) and polyether imide; and a thermoplastic polyurethane resin.

In the (A) polyamide 11 and/or polyamide 12 and (C) polyamide 6 for use in the present invention, a plasticizer is preferably added. Examples of the plasticizer include benzenesulfonic acid alkylamides, toluenesulfonic acid alkylamides and hydroxybenzoic acid alkyl esters.

Examples of the benzenesulfonic acid alkylamides include benzenesulfonic acid propylamide, benzenesulfonic acid butylamide and benzenesulfonic acid 2-ethylhexylamide.

Examples of the toluenesulfonic acid alkylamides include N-ethyl-o-toluenesulfonic acid butylamide, N-ethyl-p-toluenesulfonic acid butylamide, N-ethyl-o-toluenesulfonic acid 2-ethylhexylamide and N-ethyl-p-toluenesulfonic acid 2-ethylhexylamide.

Examples of the hydroxybenzoic acid alkyl esters include ethylhexyl o- or p-hydroxybenzoate, hexyldecyl o- or p-hydroxybenzoate, ethyldecyl o- or p-hydroxybenzoate, octyloctyl o- or p-hydroxybenzoate, decyldodecyl o- or p-hydroxybenzoate, methyl o- or p-hydroxybenzoate, butyl o- or p-hydroxybenzoate, hexyl o- or p-hydroxybenzoate, n-octyl o- or p-hydroxybenzoate, decyl o- or p-hydroxybenzoate, and dodecyl o- or p-hydroxybenzoate.

Among these, preferred are benzenesulfonic acid alkylamides such as benzenesulfonic acid butylamide and benzenesulfonic acid 2-ethylhexylamide, toluenesulfonic acid alkylamides such as N-ethyl-p-toluenesulfonic acid butylamide and N-ethyl-p-toluenesulfonic acid 2-ethylhexylamide, and hydroxybenzoic acid alkyl esters such as ethylhexyl p-hydroxybenzoate, hexyldecyl p-hydroxybenzoate and ethyldecyl p-hydroxybenzoate, more preferred are benzenesulfonic acid butylamide, ethylhexyl p-hydroxybenzoate and hexyldecyl p-hydroxybenzoate.

The amount of the plasticizer blended is from 1 to 30 parts by weight, preferably from 1 to 20 parts by weight, per 100 parts by weight of the polyamide resin component. If the amount of the plasticizer blended exceeds 30 parts by weight, the multilayer structure (for example, a fuel pipe tube or a hose of an automobile) disadvantageously decreases in low-temperature impact resistance.

In the (A) polyamide 11 and/or polyamide 12 and (C) polyamide 6 for use in the present invention, an impact resistance improver is preferably added. The impact resistance improver includes a rubber-like polymer, and a polymer having a tensile modulus of 500 MPa or less as measured according to ASTM D882 is preferred. If the tensile modulus is higher than this value, the polymer is improper as an impact resistance improver.

Examples of the impact resistance improver include an (ethylene and/or propylene)·α-olefin-based copolymer, an (ethylene and/or propylene)·(α,β-unsaturated carboxylic acid and/or unsaturated carboxylic acid ester)-based copolymer, an ionomeric polymer and an aromatic vinyl compound·conjugated diene compound-based block copolymer. These polymers can be used individually or as a mixture.

The (ethylene and/or propylene)·α-olefin-based copolymer is a polymer obtained by copolymerizing an ethylene and/or propylene with an α-olefin having a carbon number of 3 or more. Examples of the α-olefin having a carbon number of 3 or more include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and a combination thereof.

Also, a polyene of a non-conjugated diene such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, dicyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene and 2-propenyl-2,2-norbornadiene, may be copolymerized.

The (ethylene and/or propylene)·(α,β-unsaturated carboxylic acid and/or unsaturated carboxylic acid ester)-based copolymer is a polymer obtained by copolymerizing an ethylene and/or propylene with an α,β-unsaturated carboxylic acid and/or unsaturated carboxylic acid ester monomer. Examples of the α,β-unsaturated carboxylic acid monomer include an acrylic acid and a methacrylic acid, and examples of the α,β-unsaturated carboxylic acid ester monomer include a methyl ester, an ethyl ester, a propyl ester, a butyl ester, a pentyl ester, a hexyl ester, a heptyl ester, an octyl ester, a nonyl ester and a decyl ester of those unsaturated carboxylic acids, and a mixture thereof.

The ionomeric polymer is a copolymer of an olefin and an α,β-unsaturated carboxylic acid, where at least a part of the carboxyl group is ionized by the neutralization of a metal ion. The olefin is preferably an ethylene and the α,β-unsaturated carboxylic acid is preferably an acrylic acid or a methacrylic acid. However, the ionomeric polymer is not limited thereto and an unsaturated carboxylic acid ester monomer may be copolymerized. Examples of the metal ion include an alkali metal and an alkaline earth metal, such as Li, Na, K, Mg, Ca, Sr and Ba, and ions such as Al, Sn, Sb, Ti, Mn, Fe, Ni, Cu, Zn and Cd.

The aromatic vinyl compound·conjugated diene compound-based block copolymer is a block copolymer consisting of an aromatic vinyl compound-based polymer block and a conjugated diene-based polymer block. A block copolymer having at least one aromatic vinyl compound-based polymer block and at least one conjugated diene-based polymer block is used. In this block copolymer, an unsaturated bond in the conjugated diene-based polymer block may be hydrogenated.

The aromatic vinyl compound-based polymer block is a polymer block mainly comprising a structural unit derived from an aromatic vinyl compound. Examples of the aromatic vinyl compound include styrene, α-methylstyrene, o-methylstyrene, m-methylstyrene, p-methylstyrene, 2,4-dimethylstyrene, vinylnaphthalene, vinylanthracene, 4-propylstyrene, 4-cyclohexylstyrene, 4-dodecylstyrene, 2-ethyl-4-benzylstyrene and 4-(phenylbutyl)styrene. The aromatic vinyl compound-based polymer block may have a structural unit comprising one or more of these monomers. If desired, the aromatic vinyl compound-based polymer block may also have a slight amount of a structural unit comprising other unsaturated monomers.

The conjugated diene-based polymer block is a polymer block formed from one or more conjugated diene-based compound such as 1,3-butadiene, chloroprene, isoprene, 2,3-dimethyl-1,3-butadiene, 1,3-pentadiene, 4-methyl-1,3-pentadiene and 1,3-hexadiene. In the hydrogenated aromatic vinyl compound/conjugated diene block copolymer, the unsaturated bond moiety in the conjugated diene-based polymer block is partially or entirely hydrogenated to form a saturated bond. The distribution in the polymer block mainly comprising a conjugated diene may be random, tapered or partially blocked or may be an arbitrary combination thereof.

The molecular structure of the aromatic vinyl compound/conjugated diene block copolymer or a hydrogenated product thereof may be linear, branched or radial or may be an arbitrary combination thereof. Among these, as the aromatic vinyl compound/conjugated diene block copolymer and/or a hydrogenated product thereof for use in the present invention, a diblock copolymer where one aromatic vinyl compound polymer block and one conjugated diene polymer block are linearly bonded, a triblock copolymer where three polymer blocks are linearly bonded in the order of aromatic vinyl compound polymer block-conjugated diene polymer block-aromatic vinyl compound polymer block, and a hydrogenated product thereof are preferably used individually or in combination of two or more thereof. Examples thereof include an unhydrogenated or hydrogenated styrene/butadiene copolymer, an unhydrogenated or hydrogenated styrene/isoprene copolymer, an unhydrogenated or hydrogenated styrene/isoprene/styrene copolymer, an unhydrogenated or hydrogenated styrene/butadiene/styrene copolymer, and an unhydrogenated or hydrogenated styrene/(isoprene/butadiene)/styrene copolymer.

The (ethylene and/or propylene)·α-olefin-based copolymer, (ethylene and/or propylene)·(α,β-unsaturated carboxylic acid and/or unsaturated carboxylic acid ester)-based copolymer, ionomeric polymer, and block copolymer of aromatic vinyl compound and conjugated diene, which are used as the impact resistance improver, are preferably a polymer modified with a carboxylic acid and/or a derivative thereof. By the modification with such a component, a functional group having affinity for the polyamide resin is incorporated into the polymer molecule.

Examples of the functional group having affinity for the polyamide resin include a carboxylic acid group, a carboxylic anhydride group, a carboxylic acid ester group, a carboxylic acid metal salt group, a carboxylic acid imide group, a carboxylic acid amide group and an epoxy group. Examples of the compound containing such a functional group include an acrylic acid, a methacrylic acid, a maleic acid, a fumaric acid, an itaconic acid, a crotonic acid, a mesaconic acid, a citraconic acid, a glutaconic acid, a cis-4-cyclohexene-1,2-dicarboxylic acid, an endo-bicyclo[2.2.1]-5-heptene-2,3-dicarboxylic acid, a metal salt of such carboxylic acid, a monomethyl maleate, a monomethyl itaconate, a methyl acrylate, an ethyl acrylate, a butyl acrylate, a 2-ethylhexyl acrylate, a hydroxyethyl acrylate, a methyl methacrylate, a 2-ethylhexyl methacrylate, a hydroxyethyl methacrylate, an aminoethyl methacrylate, a dimethyl maleate, a dimethyl itaconate, a maleic anhydride, an itaconic anhydride, a citraconic anhydride, an endo-bicyclo-[2.2.1]-5-heptene-2,3-dicarboxylic anhydride, a maleimide, an N-ethylmaleimide, an N-butylmaleimide, an N-phenylmaleimide, an acrylamide, a methacrylamide, a glycidyl acrylate, a glycidyl methacrylate, a glycidyl ethacrylate, a glycidyl itaconate and a glycidyl citraconate.

The amount of the impact resistance improver blended is from 1 to 35 parts by weight, preferably from 5 to 25 parts by weight, per 100 parts by weight of the polyamide resin component. If the amount of the impact resistance improver blended exceeds 35 parts by weight, the mechanical properties inherent to the multilayer structure (for example, a fuel pipe tube or a hose of an automobile) are impaired and this is not preferred.

In the (A) polyamide 11 and/or polyamide 12 and (C) polyamide 6 for use in the present invention, an antioxidant, a heat stabilizer, an ultraviolet absorbent, a light stabilizer, a lubricant, an inorganic filler, an antistatic agent, a flame retardant, a crystallization accelerator and the like may be further added, if desired.

The (A) polyamide 11 and/or polyamide 12 and the (C) polyamide 6 can be produced by a known polyamide polymerization method such as melt polymerization, solution polymerization and solid phase polymerization. The production apparatus may be a known polyamide production apparatus such as batch-system reactor, one-bath or multi-bath continuous reaction apparatus, tubular continuous reaction apparatus and kneading reaction extruder (e.g., single-screw extruder, twin-screw extruder). The production of these polyamides can be performed by using a known polymerization method such as melt polymerization, solution polymerization or solid phase polymerization, and repeating the operation under atmospheric pressure, reduced pressure or elevated pressure. These polymerization methods may be used individually or in an appropriate combination.

The (A) polyamide 11 and/or polyamide 12 has a relative viscosity of 1.5 to 4.0, preferably from 2.0 to 3.5, as measured according to JIS K-6920. The (C) polyamide 6 has a relative viscosity of 2.0 to 5.0, preferably from 2.5 to 4.5, as measured according to JIS K-6920. If the relative viscosity of (A) polyamide 11 and/or polyamide 12 and (C) polyamide 6 is less than the above-described values, the obtained multilayer structure may have insufficient mechanical properties, whereas if it exceeds the above-described values, the extrusion pressure or torque becomes excessively high and this sometimes makes it difficult to produce a multilayer structure.

The (B) polyamide for use in the present invention is a polyamide consisting of a dicarboxylic acid unit comprising a naphthalene dicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units (hereinafter, this polyamide is sometimes simply referred to as polyamide 9N).

The content of the naphthalenedicarboxylic acid unit in the (B) polyamide 9N is 50 mol% or more, preferably 60 mol% or more, more preferably 75 mol% or more, still more preferably 90 mol% or more, based on all dicarboxylic acid units. If the content of the naphthalenedicarboxylic acid unit is less than 50 mol%, the obtained multilayer structure disadvantageously decreases in various physical properties such as an alcohol gasoline permeation-prevention property. Examples of the naphthalenedicarboxylic acid unit include units derived from a 2,6-naphthalenedicarboxylic acid, 2,7-naphthalenedicarboxylic acid and 1,4-naphthalenedicarboxylic acid. Among these, a unit derived from a 2,6-naphthalenedicarboxylic acid is preferred.

The dicarboxylic acid unit in the (B) polyamide 9N may contain other dicarboxylic acid unit except for the naphthalenedicarboxylic acid unit, within the range of not impairing various excellent properties of the multilayer structure of the present invention. Examples of the other dicarboxylic acid unit include units derived from an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid and suberic acid; an alicyclic dicarboxylic acid such as 1,3-cyclopentanedicarboxylic acid and 1,3/1,4-cyclohexanedicarboxylic acid; and an aromatic dicarboxylic acid such as terephthalic acid, isophthalic acid, 1,3/1,4-phenylenedioxydiacetic acid, 4,4'-oxydibenzoic acid, diphenylmethane-4,4'-dicarboxylic acid, diphenylsulfone-4,4'-dicarboxylic acid and 4,4'-diphenyldicarboxylic acid. These dicarboxylic acid units may be used individually or in combination of two or more thereof. Among these, a unit derived from an aromatic dicarboxylic acid is preferred. The content of such a dicarboxylic acid unit is preferably 40 mol% or less, more preferably 25 mol% or less, still more preferably 10 mol% or less. In addition, a unit derived from a polyvalent carboxylic acid such as trimellitic acid, trimesic acid and pyromellitic acid may also be contained within the range allowing for melt shaping.

The content of the 1,9-nonanediamine and 2-methyl-1,8-octanediamine unit in the (B) polyamide 9N is 60 mol% or more, preferably 75 mol% or more, more preferably 90 mol% or more, based on all diamine units. If the content of the unit comprising 1,9-nonanediamine and 2-methyl-1,8-octanediamine is less than 60 mol%, the multilayer structure obtained may be poor in various properties such as heat resistance, low water absorption and impact resistance.

In view of balance among formability, impact resistance and co-extrusion moldability, the molar ratio of 1,9-nonanediamine and 2-methyl-1,8-octanediamine is preferably from 30:70 to 98:2, more preferably from 40:60 to 95:5.

The diamine unit of the (B) polyamide 9N may contain other diamine unit except for the unit comprising 1,9-nonanediamine and 2-methyl-1,8-octanediamine, within the range of not impairing various excellent properties of the multilayer structure of the present invention. Examples of the other diamine unit include units derived from an aliphatic diamine such as ethylenediamine, propylenediamine, 1,4-butanediamine, 1,6-hexanediamine, 1,8-octanediamine, 1,10-decanediamine, 1,12-dodecanediamine, 3-methyl-1,5-pentanediamine, 2,2,4/2,4,4-trimethyl-1,6-hexanediamine and 5-methyl-1,9-nonanediamine; an alicyclic diamine such as 1,3/1,4-cyclohexanediamine, 1,3/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethylamine and tricyclodecanedimethylamine; and an aromatic diamine such as p-phenylenediamine, m-phenylenediamine, p-xylylenediamine, m-xylylenediamine, 4,4'-diaminodiphenylmethane, 4,4'-diaminodiphenylsulfone, 4,4'-diaminodiphenyl ether. These diamine units may be used individually or in combination of two or more thereof. The content of this other diamine unit is preferably 40 mol% or less, more preferably 25 mol% or less, still more preferably 10 mol% or less.

In the (B) polyamide 9N, the terminal of its molecular chain is preferably blocked by a terminal-blocking agent. The terminal-blocking agent preferably blocks 40% or more, more preferably 60% or more, still more preferably 70% or more, of the terminal group.

The terminal-blocking agent is not particularly limited as long as it is a monofunctional compound having reactivity with an amino or carboxyl group at the terminal of polyamide. In view of reactivity and stability of the blocked terminal, a monocarboxylic acid or a monoamine is preferred and, in view of easy handleability, a monocarboxylic acid is more preferred. In addition, for example, an acid anhydride, a monoisocyanate, a monoacid halide, monoesters and monoalcohols may also be used.

The monocarboxylic acid used as the terminal-blocking agent is not particularly limited as long as it has reactivity with an amino group, but examples thereof include an aliphatic monocarboxylic acid such as acetic acid, propionic acid, butyric acid, valeric acid, caproic acid, caprylic acid, lauric acid, tridecylic acid, myristic acid, palmitic acid, stearic acid, pivalic acid and isobutyric acid; an alicyclic monocarboxylic acid such as cyclohexanecarboxylic acid; an aromatic monocarboxylic acid such as benzoic acid, toluic acid, α-naphthalenecarboxylic acid, β-naphthalenecarboxylic acid, methylnaphthalenecarboxylic acid and phenylacetic acid; and an arbitrary mixture thereof. Among these, in view of reactivity, stability of the blocked terminal and cost, an acetic acid, a propionic acid, a butyric acid, a valeric acid, a caproic acid, a caprylic acid, a lauric acid, a tridecylic acid, a myristic acid, a palmitic acid, a stearic acid and a benzoic acid are preferred.

The monoamine used as the terminal-blocking agent is not particularly limited as long as it has reactivity with a carboxyl group, but examples thereof include an aliphatic monoamine such as methylamine, ethylamine, propylamine, butylamine, hexylamine, octylamine, decylamine, stearylamine, dimethylamine, diethylamine, dipropylamine and dibutylamine; an alicyclic monoamine such as cyclohexylamine and dicyclohexylamine; an aromatic amine such as aniline, toluidine, diphenylamine and naphthylamine; and an arbitrary mixture thereof. Among these, in view of reactivity, boiling point, stability of the blocked terminal and cost, butylamine, hexylamine, octylamine, decylamine, stearylamine, cyclohexylamine and aniline are preferred.

The amount of the terminal-blocking agent used at the production of the (B) polyamide 9N is determined by the relative viscosity of the finally obtained polyamide and the blocking percentage of the terminal group. Specifically, the terminal-blocking agent is usually used in an amount of 0.3 to 10 mol% based on the total molar number of dicarboxylic acid and diamine, though this varies depending on reactivity and boiling point of the terminal-blocking agent used, reaction apparatus, reaction conditions and the like.

The (B) polyamide 9N for use in the present invention can be produced by a polyamide polymerization method known as a method for producing a crystalline polyamide. The production apparatus may be a known polyamide production apparatus such as a batch-system reactor, a one-bath or a multi-bath continuous reaction apparatus, a tubular continuous reaction apparatus and a kneading reaction extruder (e.g., a single-screw extruder and a twin-screw extruder). The production of this polyamide can be performed by using a known polymerization method such as melt polymerization, solution polymerization or solid phase polymerization, and repeating the operation under atmospheric pressure, a reduced pressure or an elevated pressure. These polymerization methods may be used individually or in an appropriate combination.

The (B) polyamide 9N for use in the present invention preferably has a relative viscosity of 1.5 to 4.0, more preferably from 1.8 to 3.5, still more preferably from 2.0 to 3.0, as measured according to JIS K-6920. If the relative viscosity is less than this range, the obtained multilayer structure may have insufficient mechanical properties, whereas if it exceeds the above-described range, the extrusion pressure or torque becomes excessively high and this sometimes makes it difficult to produce a multilayer structure.

The (B) polyamide 9N may be used alone or as a mixture with other polyamide-based resins or other thermoplastic resins. In the mixture, the polyamide 9N content is preferably 60 wt% or more.

Examples of the other polyamide-based resin or other thermoplastic resin include the same resins as those described above for the (A) polyamide 11 and/or polyamide 12 and (C) polyamide 6. Furthermore, a mixture with the (A) polyamide 11 and/or polyamide 12 or (C) polyamide 6 for use in the present invention may also be used.

In the (B) polyamide 9N, an antioxidant, a heat stabilizer, an ultraviolet absorbent, a light stabilizer, a lubricant, an inorganic filler, an antistatic agent, a flame retardant, a crystallization accelerator, a plasticizer, a colorant, a lubricity agent, an impact resistance improver and the like may be added, if desired.

The multilayer structure of the present invention comprises at least two or more layers including a layer (a) comprising (A) polyamide 11 and/or polyamide 12, and a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units.

The layer (a) comprising (A) polyamide 11 and/or polyamide 12 is preferably disposed as the outermost layer. If a layer comprising a polyamide-based resin other than the (A) polyamide 11 and/or polyamide 12 is disposed as the outermost layer, environmental stress cracking may be generated due to an anti-freezing agent or the like.

A layer (b) comprising (B) polyamide 9N must be contained, and this layer is preferably disposed on the inner side with respect to the layer (a) in the multilayer structure. If the layer (b) comprising (B) polyamide 9N is not disposed, the alcohol gasoline permeation-preventing property of the multilayer structure becomes poor.

In a preferred embodiment, the multilayer structure comprises at least three or more layers including a layer (a) comprising (A) polyamide 11 and/or polyamide 12, a layer (b) comprising (B) polyamide 9N, and a layer (c) comprising (A) polyamide 11 and/or polyamide 12 or (C) polyamide 6.

In the multilayer structure above, when the layer (c) comprising (A) polyamide 11 and/or polyamide 12 or (C) polyamide 6 is disposed as the innermost layer, an economically advantageous multilayer structure having excellent resistance against chemicals and impact can be obtained and this is more preferred.

Furthermore, in order to prevent the fuel from catching fire as a result of accumulation of static electricity generated due to internal friction of the fuel circulating within a fuel pipe or due to friction against the fuel pipe wall, a layer comprising a resin composition having blended therein an electrically conducting filler is preferably disposed as the innermost layer. By virtue of such arrangement, explosion due to static electricity generated at the transportation of a fluid such as fuel can be prevented. At this time, when a layer not having electrical conductivity is disposed on the outer side with respect to the electrically conducting layer, the low-temperature impact resistance and the electrical conductivity both can be attained and this is advantageous in view of profitability.

The electrically conducting filler as used in the present invention includes all fillers added for imparting electrically conducting performance to a resin, and examples thereof include particulate, flaked or fibrous fillers.

Examples of the particulate filler which can be suitably used include carbon black and graphite. Examples of the flaked filler which can be suitably used include aluminum flake, nickel flake and nickel-coated mica. Examples of the fibrous filler which can be suitably used include carbon fiber, carbon-coated ceramic fiber, carbon whisker and metal fiber such as aluminum fiber, copper fiber, brass fiber and stainless steel fiber. Among these, carbon black is most preferred.

The carbon black usable in the present invention includes all carbon blacks generally used for imparting electrical conductivity. Preferred examples of the carbon black include, but are not limited to, acetylene black obtained by the complete combustion of an acetylene gas, Ketjen black produced by the furnace-type incomplete combustion starting from a crude oil, oil black, naphthalene black, thermal black, lamp black, channel black, roll black and disk black. Among these, acetylene black and furnace black (Ketjen black) are more preferred.

As for the carbon black, various carbon powders differing in the properties such as particle diameter, surface area, DBP absorption and ash content are being produced. The carbon black usable in the present invention is not particularly limited in these properties, but those having a good chain structure and a large aggregation density are preferred. In view of impact resistance, the carbon black is preferably not blended in a large amount. From the standpoint of obtaining excellent electrical conductivity with a smaller amount, the average particle diameter of carbon black is preferably 500 nm or less, more preferably from 5 to 100 nm, still more preferably from 10 to 70 nm, the surface area (by BET method) is preferably 10 m²/g or more, more preferably 300 m²/g or more, still more preferably from 500 to 1,500 m²/g, and the DBP (dibutyl phthalate) absorption is preferably 50 ml/100 g or more, more preferably 100 ml/100 g or more, still more preferably 300 ml/100 g or more. The ash content of carbon black is preferably 0.5 wt% or less, more preferably 0.3 wt% or less. The DBP absorption as used herein means a value measured by the method prescribed in ASTM-D2414. A carbon black having a volatile content of less than 1.0 wt% is more preferred.

The electrically conducting filler may be surface-treated with a surface-treating agent such as titanate-type, aluminum-type or silane-type surface-treating agent. In addition, a granulated electrically conducting filler may also be used so as to enhance the melt kneading processability.

The amount of the electrically conducting filler blended varies depending on the kind of the electrically conducting filler used and cannot be indiscriminately specified but, generally, in view of balance of the electrical conductivity with flowability, mechanical strength and the like, a blending amount of 3 to 30 parts by weight per 100 parts by weight of the polyamide resin component is preferably selected.

Also, from the standpoint of obtaining a sufficiently high antistatic performance, the electrically conducting filler is preferably blended such that the shaped article obtained by melt-extruding a polyamide resin composition containing the electrically conducting filler has a surface resistivity of 10⁸ Ω/square or less, more preferably 10⁶ Ω/square or less. However, the blending of the electrically conducting filler is liable to incur lowering of strength and flowability and, therefore, if the objective electrical conductivity level can be achieved, the amount of the electrically conducting filler blended is preferably as small as possible.

In the multilayer structure of the present invention, the thickness of each layer is not particularly limited and can be controlled according to the kind of the polymer constituting each layer, the number of layers in the entire multilayer structure, the use application and the like. However, the thickness of each layer is determined by taking into account the properties of the multilayer structure, such as alcohol gasoline permeation-preventing property, low-temperature impact resistance and flexibility. In general, the thickness of each of the layers (a), (b) and (c) is preferably from 3 to 90% of the entire thickness of the multilayer structure and, in view of the alcohol gasoline permeation-preventing property, the thickness of the layer (b) is more preferably from 5 to 80%, still more preferably from 10 to 50%, of the entire thickness of the multilayer structure.

The total number of layers in the multilayer structure of the present invention is not particularly limited and may be any number as long as the multilayer structure comprises at least two layers including a layer (a) comprising (A) polyamide 11 and/or polyamide 12 and a layer (b) comprising (B) polyamide 9N, preferably at least three or more layers including a layer (a) comprising (A) polyamide 11 and/or polyamide 12, a layer (b) comprising (B) polyamide 9N and a layer (c) comprising (A) polyamide 11 and/or polyamide 12 or (C) polyamide 6. In the multilayer structure of the present invention, one or more layer comprising other thermoplastic resin may be provided in addition to those three layers (a), (b) and (c) so as to impart an additional function or obtain a multilayer structure advantageous in view of profitability.

Examples of the other thermoplastic resin include a polyolefin-based resin such as high-density polyethylene (HDPE), low-density polyethylene (LDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); the above-described polyolefin-based resin having incorporated thereinto a functional group such as carboxyl group (e.g., acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endo-bicyclo[2.2.1]-5-heptene-2,3-dicarboxylic acid) or its metal salt (Na, Zn, K, Ca, Mg), acid anhydride group (e.g., malic anhydride, itaconic anhydride, citraconic anhydride, endo-bicyclo[2.2.1]-5-heptene-2,3-dicarboxylic anhydride), and epoxy group (e.g., glycidyl acrylate, glycidyl methacrylate, glycidyl ethacrylate, glycidyl itaconate, glycidyl citraconate); a polyester-based resin such as polybutylene terephthalate (PBT), polyethylene terephthalate (PET), polyethylene isophthalate (PEI), PET/PEI copolymer, polyarylate (PAR), polybutylene naphthalate (PBN), polyethylene naphthalate (PEN) and liquid crystal polyester (LCP); a polyether-based resin such as polyacetal (POM) and polyphenylene oxide (PPO); a polysulfone-based resin such as polysulfone (PSF) and polyether sulfone (PES); a polythioether-based resin such as polyphenylene sulfide (PPS) and polythioethersulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl ester-based resin such as polyvinyl acetate (PVAc); a polyvinyl chloride-based resin such as polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; fluorine-based resin such as polyvinylidene fluoride (PVDF), polyvinyl fluoride (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/perfluoro(alkylvinylether) copolymer (PFA); a polycarbonate-based resin such as polycarbonate (PC); a polyimide-based resin such as thermoplastic polyimide (PI), polyamideimide (PAI) and polyether imide (PEI); a thermoplastic polyurethane-based resin; a polyamide-based resin such as polyethyleneadipamide (polyamide 26), polytetramethyleneadipamide (polyamide 46), polyhexamethyleneadipamide (polyamide 66), polyhexamethyleneazelamide (polyamide 69), polyhexamethylenesebacamide (polyamide 610), polyhexamethyleneundecamide (polyamide 611), polyhexamethylenedodecamide (polyamide 612), polyhexamethyleneterephthalamide (polyamide 6T), polyhexamethyleneisophthalamide (polyamide 61), polynonamethylenedodecamide (polyamide 912), polydecamethylenedodecamide (polyamide 1012), polydodecamethylenedodecamide (polyamide 1212), polymethaxylyleneadipamide (polyamide MXD6), polytrimethylhexamethyleneterephthalamide (polyamide TMHT), polybis(4-aminocyclohexyl)methanedodecamide (polyamide PACM12), polybis(3-methyl-4-aminocyclohexyl)methanedodecamide (polyamide dimethyl PACM12), polynonamethyleneterephthalamide (polyamide 9T), polydecamethyleneterephthalamide (polyamide 10T), polyundecamethyleneterephthalamide (polyamide 11T), polydodecamethyleneterephthalamide (polyamide 12T), polynonamethylenehexahydroterephthalamide (polyamide 9T(H)), polydecamethylenehexahydroterephthalamide (polyamide 10T(H)), polyundecamethylenehexahydroterephthalamide (polyamide 11T(H)), polydecamethylenehexahydroterephthalamide (polyamide 12T(H)) and a copolymer using several kinds of these polyamide raw material monomers; a polyurethane elastomer; a polyester elastomer; and a polyamide elastomer.

Among these, preferred are a polyester-based resin, a polyamide-based resin, a polythioether-based resin and a fluorine-containing resin, and more preferred are a polyester-based resin, a polyamide-based resin and a fluorine-containing resin.

Also, an arbitrary substrate other than the thermoplastic resin, for example, paper, a metal-based material, an unstretched or uniaxially or biaxially stretched plastic film or sheet, a woven fabric, a nonwoven fabric, a metal, cotton or wood, may be stacked. Examples of the metal-based material include a metal such as aluminum, iron, copper, nickel, gold, silver, titanium, molybdenum, magnesium, manganese, lead, tin, chromium, beryllium, tungsten and cobalt, a metal compound, an alloy steel comprising two or more members thereof such as stainless steel, an aluminum alloy, a copper alloy such as brass and bronze, and alloys such as nickel alloy.

The number of layers in the multilayer structure of the present invention is 2 or more, but in view of mechanism of the multilayer structure producing apparatus, the number of layers is 7 or less, preferably from 2 to 6, more preferably from 3 to 5. Fig. 1 shows a three-layered laminate. In the case of a two-layered laminate, the layer (c) is not present, and in the case of a laminate of three or more layers, the layers other than the layers (a) and (b) may be arbitrary layers as described above.

The multilayer structure of the present invention can be produced into various shapes such as film, sheet, tube and hose, by using a commonly employed thermoplastic resin molding machine such as extrusion molding machine, blow molding machine, compression molding machine and injection molding machine. In this production, an arbitrary melt molding method including a co-extrusion molding method (e.g., T-die extrusion, inflation extrusion, blow molding, profile extrusion, extrusion coating) and a multilayer injection molding method may be used.

The multilayer shaped article comprising the multilayer structure of the present invention is used as automobile parts, industrial materials, industrial supplies, electrical and electronic parts, machine parts, office equipment parts, household articles, containers, sheets, films, fibers and other various shaped articles having any purpose and any shape. Specific examples thereof include a fuel pipe tube or a hose for automobiles, an automobile radiator hose, a brake hose, an air conditioner hose, a tube such as electric wire covering material and optical fiber covering material, hoses, an agricultural film, a lining, a building interior material (e.g., wallpaper), a film of laminate steel sheet or the like, sheets, an automobile radiator tank, a liquid chemical bottle, a liquid chemical tank, a bag, a liquid chemical container, and tanks such as gasoline tank. In particular, the shaped article is useful as a fuel pipe tube or a hose for an automobile.

The fuel pipe tube or the hose for an automobile is described in detail below.

Examples of the method for producing a fuel pipe tube or a hose for automobiles include a method (co-extrusion method) of melt-extruding materials by using extruders corresponding to the number of layers or number of materials and simultaneously stacking the layers or materials in the inside or outside of a die, and a method (coating method) of once producing a single-layer tube or hose or previously producing a multilayer tube or hose by the above-described production method, and then sequentially laminating and integrating the resins on the outer side of the tube or hose by using, if desired, an adhesive.

In the case where the obtained fuel pipe tube or hose for an automobile has a complicated shape or is formed into a shaped article by applying heat bending after the molding, in order to remove the residual strain, the formed fuel pipe tube or hose for an automobile may be heat-treated at a temperature lower than the lowest melting point among the melting points of resins constituting the tube or hose for 0.01 to 10 hours to obtain an objective shaped particle.

The fuel pipe tube or hose for an automobile may have an undulated region. The undulated region means a region formed to have a shape of wave, bellows, accordion, corrugation or the like. The undulated region may be provided over the entire length of the fuel pipe tube or hose for an automobile or may be partially provided in an appropriate middle portion. The undulated region can be easily formed by shaping a straight tube and subsequently molding it to have a predetermined undulated shape. By virtue of having such an undulated region, an impact-absorbing property is imparted and the fixing operation is facilitated. Furthermore, for example, the fuel pipe tube or hose may be easily attached to necessary parts such as connector or may be easily form into an L- or U-shaped tube by bending.

By taking account of pebbling, abrasion with other parts and flame resistance, the outer circumference of the shaped fuel pipe tube or hose for an automobile may be entirely or partially provided with a solid or sponge-like protective member (protector) formed of epichlorohydrin rubber (ECO), acrylonitrile/butadiene rubber (NBR), a mixture of NBR and polyvinyl chloride, chlorosulfonated polyethylene rubber, chlorinated polyethylene rubber, acrylic rubber (ACM), chloroprene rubber (CR), ethylene/propylene rubber (EPR), ethylene/propylene/diene rubber (EPDM), a mixture rubber of NBR and EPDM, or a thermoplastic elastomer such as vinyl chloride type, olefin type, ester type and amide type. The protective member may be formed as a sponge-like porous material by a known method. By forming as a porous material, a lightweight and highly adiabatic protective part can be obtained. Also, the material cost can be reduced. Alternatively, the strength of the protective member may be improved by adding glass fiber or the like. The protective member is not particularly limited in its shape but is usually a cylindrical member or a block member having a recess for receiving the fuel pipe tube or hose for an automobile. In the case of a cylindrical member, the fuel pipe tube or hose for an automobile may be inserted into a previously prepared cylindrical member, or a cylindrical member may be coated by extrusion on the fuel pipe tube or hose for an automobile, so that the protective member and the fuel pipe tube or hose for an automobile can be tightly contacted. For bonding the protective member and the fuel pipe tube or hose for an automobile, an adhesive is coated, if desired, on the inner surface or the above recess surface of the protective member, and the fuel pipe tube or hose for an automobile is inserted or fitted into the protective member to allow for tight contact therebetween, whereby a structure in which the fuel pipe tube or hose for an automobile and the protective member are integrated is formed. Also, reinforcement by a metal or the like may be applied.

The fuel pipe tube or hose for an automobile is not limited in its outer diameter but in view of the flow rate of fuel (for example, gasoline) or the like, is designed to have a wall thickness large enough to ensure that the gasoline permeability is not increased, the burst pressure of a normal tube or hose can be maintained, and the flexibility to such an extent of facilitating the fixing of tube or hose and giving good vibration resistance in use can be maintained. Preferably, the outer diameter is from 4 to 30 mm, the inner diameter is from 3 to 25 mm, and the wall thickness is from 0.1 to 5 mm.

### EXAMPLES

The present invention is described in greater detail below by referring to Examples and Comparative Examples, but the present invention is not limited thereto.

In Examples and Comparative Examples, the analyses and measurements of physical properties were performed as follows.

### [Relative Viscosity]

The relative viscosity was measured according to JIS K-6920 in 96% sulfuric acid under the conditions that the polyamide concentration was 1% and the temperature was 25°C.

### [Evaluation of Physical Properties]

### (Low-Temperature Impact Resistance)

This was evaluated by the method described in SAE J2260.

### (Alcohol Gasoline Permeation-Preventing Property)

One end of a tube cut to 200 mm was plugged, alcohol/gasoline obtained by mixing Fuel C (isooctane/toluene=50/50 by volume) and ethanol at a volume ratio of 90/10 was charged into the tube, and the other end was also plugged. Thereafter, the entire weight was measured, then the test tube was placed in an oven at 60°C, and change in the weight was measured every day. The change in the weight per day was divided by the inner surface area per m of the tube to calculate the fuel permeation coefficient (g/m²·day).

### (Interlayer Adhesion)

The tube cut into 200 mm was further cut into a half in the longitudinal direction to prepare a test piece. The test piece was subjected to a 180° peel test at a peeling speed of 50 mm/min by using a Tensilon universal tester. The peel strength was read from the peak of S-S curve and the interlayer adhesion was evaluated.

### [Materials Used in Examples and Comparative Examples]

### (A) Polyamide 12

### (A-1) Production of Polyamide 12 Resin Composition

JSR T7712SP (produced by JSR corporation) as an impact resistance improver was previously mixed with UBESTA3030U (produced by Ube Industries, Ltd., relative viscosity: 2.27). While supplying the mixture to a twin-screw melt-kneading machine (manufactured by Japan Steel Works, Ltd., Model: TEX44), benzenesulfonic acid butylamide as a plasticizer was fed by a quantitative pump in the middle of the cylinder of the twin-screw melt-kneading machine and melt-kneaded at a cylinder temperature of 180 to 260°C. The resulting resin melt was extruded as a strand, introduced into a water tank, cooled, cut and then vacuum-dried to give pellets of a polyamide 12 resin composition comprising 85 wt% of polyamide 12 resin, 10 wt% of impact resistance improver and 5 wt% of plasticizer (hereinafter, this polyamide resin composition is referred to as (A-1)).

### (A-2) Production of Polyamide 12 Resin Composition

Pellets of a polyamide 12 resin composition comprising 90 wt% of polyamide 12 resin and 10 wt% of impact resistance improver were obtained in the same manner as in the production method of (A-1) except for not using a plasticizer (hereinafter, this polyamide resin composition is referred to as (A-2)).

### (A-3) Production of Polyamide 12 Resin Composition

Pellets of a polyamide 12 resin composition comprising 70 wt% of polyamide 12 resin, 22 wt% of impact resistance improver and 8 wt% of electrically conducting filler were obtained in the same manner as in the production method of (A-1) except that UBESTA3030U was changed to UBESTA3020U (produced by Ube Industries, Ltd., relative viscosity: 1.86), Ketjen Black EC600JD (produced by Akzo Nobel K.K.) was used as the electrically conducting filler and a plasticizer was not used (hereinafter, this polyamide resin composition is referred to as (A-3)).

### (B) Polyamide 9N

### (B-1) Production of Polyamide 9N

2,6-Naphthalenedicarboxylic acid (42,848 g (198.2 mol)), 26,909 g (170 mol) of 1,9-nonanediamine, 4,748.7 g (30 mol) of 2-methyl-1,8-octanediamine, 439.6 g (3.6 mol) of benzoic acid, 60 g of sodium hypophosphite monohydrate (0.1 wt% based on raw material) and 40 liter of distilled water were charged into an autoclave, followed by nitrogen purging.

The contents were stirred at 100°C for 30 minutes and the internal temperature was increased to 210°C over 2 hours. At this time, the pressure within the autoclave was increased to 2.2 MPa. In this state, the reaction was continued for 1 hour and then the temperature was increased to 230°C. Thereafter, the temperature was kept at 230°C for 2 hours and the reaction was performed while keeping the pressure at 2.2 MPa by gradually extracting the water vapor. Subsequently, the pressure was decreased to 1.0 MPa over 30 minutes and the reaction was further performed for 1 hour to obtain a prepolymer. This prepolymer was dried at 100°C for 12 hours under reduced pressure, ground to a size of 2 mm or less and then subjected to solid phase polymerization at 230°C and 0.013 kPa for 10 hours to obtain polyamide 9N having a melting point of 303°C and a relative viscosity of 2.32 (hereinafter this polyamide is referred to as (B-1)).

### (B-2) Production of Polyamide 9N

Polyamide 9N having a melting point of 275°C and a relative viscosity of 2.40 was obtained in the same manner as in (B-1) Production of Polyamide 9N except that in (B-1) Production of Polyamide 9N, 26,909 g (170 mol) of 1,9-nonanediamine was changed to 15,829 g (100 mol) and 4,748.7 g (30 mol) of 2-methyl-1,8-octanediamine was changed to 15,829 g (100 mol) (hereinafter this polyamide is referred to as (B-2)).

### (C) Polyamide 6

### (C-1) Production of Polyamide 6 Resin Composition

JSR T7712SP (produced by JSR Corporation) as an impact resistance improver was previously mixed with UBE Nylon 1024B (produced by Ube Industries, Ltd., relative viscosity: 3.50). While supplying the mixture to a twin-screw melt-kneading machine (manufactured by Japan Steel Works, Ltd., Model: TEX44), benzenesulfonic acid butylamide as a plasticizer was fed by a quantitative pump in the middle of the cylinder of the twin-screw melt-kneading machine and melt-kneaded at a cylinder temperature of 230 to 270°C. The resulting resin melt was extruded as a strand, introduced into a water tank, cooled, cut and then vacuum-dried to give pellets of a polyamide 6 resin composition comprising 80 wt% of polyamide 6 resin, 15 wt% of impact resistance improver and 5 wt% of plasticizer (hereinafter, this polyamide resin composition is referred to as (C-1)). (C-2) Production of Polyamide 6 Resin Composition

Pellets of a polyamide 6 resin composition comprising 80 wt% of polyamide 6 resin and 20 wt% of impact resistance improver were obtained in the same manner as in the production method of (C-1) except for not using a plasticizer (hereinafter, this polyamide resin composition is referred to as (C-2)).

### (C-3) Production of Polyamide 6 Resin Composition

Pellets of a polyamide 6 resin composition comprising 58 wt% of polyamide 6 resin, 30 wt% of impact resistance improver, 5 wt% of plasticizer and 7 wt% of electrically conducting filler were obtained in the same manner as in the production method of (C-1) except that UBE Nylon 1024B was changed to UBE Nylon 1015B (produced by Ube Industries, Ltd., relative viscosity: 2.64) and Ketjen Black EC600JD (produced by Akzo Nobel K.K.) was used as the electrically conducting filler (hereinafter, this polyamide resin composition is referred to as (C-3)).

### (D) Adhesive Resin

(D-1) Modified polyolefin resin, UBond F1100 produced by Ube Industries, Ltd.

### (E) Polyamide MXD6 (polymethaxylyleneadipamidie)

(E-1) MGC Reny MX6011 (relative viscosity: 2.38, melting point 243°C) produced by Mitsubishi Gas Chemical Company, Inc.

### (F) ETFE (ethylene/tetrafluoroethylene copolymer)

(F-1) PA12·ETFE adhesive, EA-LR43 produced by Daikin Industries, Ltd.

(F-2) ETFE, EP-610 produced by Daikin Industries, Ltd.
Example 1:
In a three-layer tube molding machine Plabor (manufactured by Research Laboratory of Plastics Technology Co., Ltd.), (A) Polyamide 12 Resin Composition (A-1), (B) Polyamide 9N (B-1), and (C) Polyamide 6 Resin Composition (C-1) were separately melted at an extrusion temperature of 250°C for (A), 330°C for (B) and 260°C for (C), and the resin melts extruded were joined by an adapter to form a multilayer tubular body. The obtained multilayer tubular body was cooled by a sizing die capable of controlling the dimension and then taken up to obtain a multilayer tube having an inner diameter of 6 mm and an outer diameter of 8 mm and having a layer structure consisting of a layer (a) (outermost layer) comprising (A) a polyamide 12 resin composition, a layer (b) (intermediate layer) comprising (B) polyamide 9N and a layer (c) (innermost layer) comprising (C) a polyamide 6 resin composition, in which (a)/(b)/(c) = 0.45/0.15/0.40 mm. The obtained multilayer tube was measured for physical properties and the results are shown in Table 1.
Example 2:
A multilayer tube having a layer structure shown in Table 1 was obtained in the same manner as in Example 1 except that (B) Polyamide 9N (B-1) was changed to (B-2) and the (B) was melted at an extrusion temperature of 300°C. The obtained multilayer tube was measured for physical properties and the results are shown in Table 1.
Example 3:
A multilayer tube having a layer structure shown in Table 1 was obtained in the same manner as in Example 2 except for changing (C) Polyamide 6 Resin Composition (C-1) to (C-2). The obtained multilayer tube was measured for physical properties and the results are shown in Table 1.
Example 4:
A multilayer tube having a layer structure shown in Table 1 was obtained in the same manner as in Example 2 except for changing (A) Polyamide 12 Resin Composition (A-1) to (A-2). The obtained multilayer tube was measured for physical properties and the results are shown in Table 1.
Example 5:
A multilayer tube having a layer structure shown in Table 1 was obtained in the same manner as in Example 2 except for changing (C) Polyamide 6 Resin Composition (C-1) to (C-3). The obtained multilayer tube was measured for physical properties and the results are shown in Table 1. Furthermore, the electrical conductivity of the obtained multilayer tube was measured according to SAE J-2260 and found to be 10⁶ Ω/square or less, indicating an excellent destaticizing performance.
Example 6:
A multilayer tube having a layer structure shown in Table 1 was obtained in the same manner as in Example 2 except for changing (C) Polyamide 6 Resin Composition (C-1) to (A) Polyamide 12 Resin Composition (A-1). The obtained multilayer tube was measured for physical properties and the results are shown in Table 1.
Example 7:
A multilayer tube having a layer structure shown in Table 1 was obtained in the same manner as in Example 2 except for changing (C) Polyamide 6 Resin Composition (C-1) to (A) Polyamide 12 Resin Composition (A-3). The obtained multilayer tube was measured on the physical properties and the results are shown in Table 1. Furthermore, the electrical conductivity of the obtained multilayer tube was measured according to SAE J-2260 and found to be 10⁶ Ω/square or less, indicating an excellent destaticizing performance.
Example 8:
In a four-layer tube molding machine Plabor (manufactured by Research Laboratory of Plastics Technology Co., Ltd.), (A) Polyamide 12 Resin Composition (A-1), (B) Polyamide 9N (B-2), (C) Polyamide 6 (C-1), and (C) Polyamide 6 Resin Composition (C-3) were separately melted at an extrusion temperature of 250°C for (A), 300°C for (B) and 270°C for (C), and the resin melts extruded were joined by an adapter to form a multilayer tubular body. The obtained multilayer tubular body was cooled by a sizing die capable of controlling the dimension and then taken up to obtain a multilayer tube having an inner diameter of 6 mm and an outer diameter of 8 mm and having a layer structure consisting of a layer (a) (outermost layer) comprising (A) a polyamide 12 composition, a layer (b) (intermediate layer) comprising (B) polyamide 9N, a layer (c) (inner layer) comprising (C) Polyamide 6 Resin Composition (C-1), and a layer (c') (innermost layer) comprising (C) Polyamide 6 Resin Composition (C-3), in which (a)/(b)/(c)/(c') = 0.45/0.15/0.30/0.10 mm. The obtained multilayer tube was measured for physical properties and the results are shown in Table 1. Furthermore, the electrical conductivity of the obtained multilayer tube was measured according to SAE J-2260 and found to be 10⁶ Ω/square or less, indicating an excellent destaticizing performance.
Example 9:
A multilayer tube having a layer structure shown in Table 1 was obtained in the same manner as in Example 8 except for changing (C) Polyamide 6 Resin Composition (C-1) to (A) Polyamide 12 Resin Composition (A-1) and changing (C) Polyamide 6 Resin Composition (C-3) to (A) Polyamide 12 Resin Composition (A-3). The obtained multilayer tube was measured for physical properties and the results are shown in Table 1. Furthermore, the electrical conductivity of the obtained multilayer tube was measured according to SAE J-2260 and found to be 10⁶ Ω/square or less, indicating an excellent destaticizing performance.
Example 10:
In a two-layer tube molding machine Plabor (manufactured by Research Laboratory of Plastics Technology Co., Ltd.), (A) Polyamide 12 Resin Composition (A-1), and (B) Polyamide 9N (B-2) were separately melted at an extrusion temperature of 250°C for (A) and 300°C for (B), and the resin melts extruded were joined by an adapter to form a multilayer tubular body. The obtained multilayer tubular body was cooled by a sizing die capable of controlling the dimension and then taken up to obtain a multilayer tube having an inner diameter of 6 mm and an outer diameter of 8 mm and having a layer structure consisting of a layer (a) (outermost layer) comprising (A) a polyamide 12 resin composition and a layer (b) (innermost layer) comprising (B) polyamide 9N, in which (a)/(b) = 0.85/0.15 mm. The obtained multilayer tube was measured on the physical properties and the results are shown in Table 1.
Comparative Example 1:
A multilayer tube having an inner diameter of 6 mm and an outer diameter of 8 mm and having a layer structure consisting of a layer (a) comprising (A) a polyamide 12 resin composition, a layer (c) comprising (C) a polyamide 6 resin composition and a layer (d) comprising (D) an adhesive resin, in which (a)/(d)/(c) = 0.60/0.10/0.30 mm, was obtained in the same manner as in Example 1 except for changing (B) Polyamide 9N (B-1) to (D) Adhesive Resin (D-1) and separately meting the resins at an extrusion temperature of 190°C for (D). The obtained multilayer tube was measured on the physical properties and the results are shown in Table 1.
Comparative Example 2:
A multilayer tube having a layer structure shown in Table 1 was obtained in the same manner as in Example 1 except for changing (A) Polyamide 12 Resin Composition (A-1) to (C) Polyamide 6 Resin Composition (C-1). The obtained multilayer tube was measured for physical properties and the results are shown in Table 1.
Comparative Example 3:
A multilayer tube having an inner diameter of 6 mm and an outer diameter of 8 mm and having a layer structure consisting of a layer (c) comprising (C) a polyamide 6 resin composition and a layer (e) comprising (E) polyamide MXD6, in which (c)/(e)/(c) = 0.45/0.15/0.40 mm, was obtained in the same manner as in Comparative Example 2 except for changing (B) Polyamide 9N (B-1) to (E) Polyamide MXD6 (E-1) and separately melting the resins at an extrusion temperature of 280°C for (E). The obtained multilayer tube was measured for physical properties and the results are shown in Table 1.
Comparative Example 4:
A multilayer tube shown in Table 1 was obtained in the same manner as in Comparative Example 3 except that (C) Polyamide 6 Resin Composition (C-1) disposed as the outermost layer was changed to (A) Polyamide 12 Resin Composition (A-1). The obtained multilayer tube was measured for physical properties and the results are shown in Table 1.
Comparative Example 5:
A multilayer tube having an inner diameter of 6 mm and an outer diameter of 8 mm and having a layer structure consisting of a layer (a) (outermost layer) comprising (A) a polyamide 12 resin composition, a layer (f) (inner layer) comprising (F) ETFE (F-1) and a layer (f') (innermost layer) comprising (F) ETFE (F-2), in which (a)/(f)/(f') = 0.75/0.10/0.15 mm, was obtained in the same manner as in Example 1 except that (B) Polyamide 9N (B-1) was changed to (F) PA12 ETFE Adhesive (F-1), (C) Polyamide 6 Resin Composition (C-1) was changed to (F) ETFE (F-2), and the resins were separately melted at an extrusion temperature of 250°C for (F-1) and 295°C for (F-2). The obtained multilayer tube was measured for physical properties and the results are shown in Table 1.

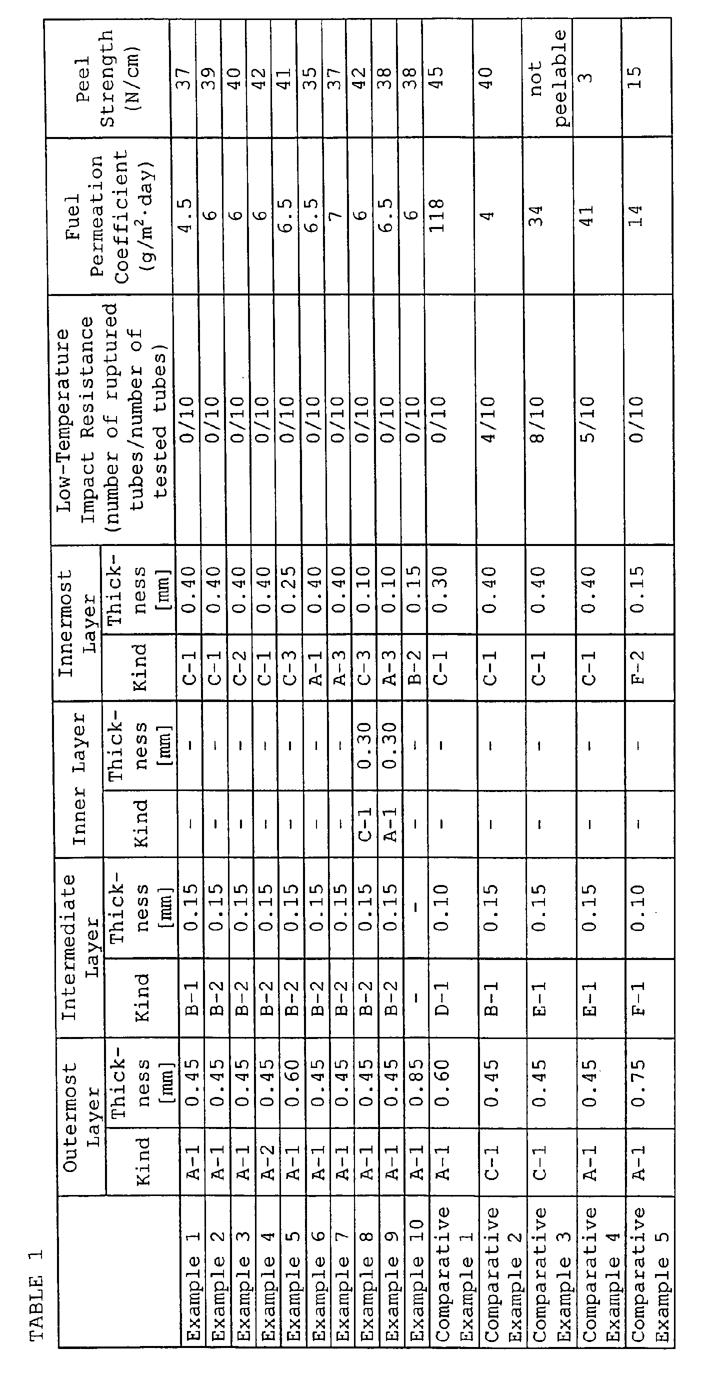

### INDUSTRIAL APPLICABILITY

The multilayer structure of the present invention is excellent in the heat resistance, chemical resistance, low-temperature impact resistance, alcohol gasoline permeation-preventing properties and interlayer adhesion. Accordingly, the multilayer structure of the present invention is effective as a film, hose, tube, bottle or tank for use in automobile parts, industrial materials, industrial supplies, electrical and electronic parts, machine parts, office equipment parts, household articles and containers. The multilayer structure of the present invention is particularly useful as a fuel pipe tube or hose for an automobile.

## Claims

1. A multilayer structure comprising at least two or more layers including a layer (a) comprising (A) polyamide 11 and/or polyamide 12, and a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units.

2. The multilayer structure as claimed in claim 1, which comprises at least two or more layers, having a (a)/(b) layer structure where the layer (a) is disposed as the outermost layer and the layer (b) is disposed on the inner side with respect to the layer (a).

3. The multilayer structure as claimed in claim 1 or 2, wherein the innermost layer has electrical conductivity.

4. The multilayer structure as claimed in any one of claims 1 to 3, wherein said layers are formed by co-extrusion.

5. A multilayer structure comprising at least three or more layers including a layer (a) comprising (A) polyamide 11 and/or polyamide 12, a layer (b) comprising (B) a polyamide (polyamide 9N) consisting of a dicarboxylic acid unit comprising a naphthalenedicarboxylic acid unit in a proportion of 50 mol% or more based on all dicarboxylic acid units and a diamine unit comprising a 1,9-nonanediamine and/or 2-methyl-1,8-octanediamine unit in a proportion of 60 mol% or more based on all diamine units, and a layer (c) comprising (A) polyamide 11 and/or polyamide 12 or (C) polyamide 6.

6. The multilayer structure as claimed in claim 5, wherein said layer (c) comprising (A) polyamide 11 and/or polyamide 12 or (C) polyamide 6 is disposed as the innermost layer.

7. The multilayer structure as claimed in claim 5 or 6, wherein the innermost layer has electrical conductivity.

8. The multilayer structure as claimed in any one of claims 5 to 7, wherein said layers are formed by co-extrusion.

9. A multilayer shaped article comprising the multilayer structure claimed in any one of claims 1 to 4, which is a shaped article selected from the group consisting of a film, a hose, a tube, a bottle and a tank.

10. The multilayer shaped article as claimed in claim 9, which is a fuel pipe tube or hose of an automobile.

11. A multilayer shaped article comprising the multilayer structure claimed in any one of claims 5 to 8, which is a shaped article selected from the group consisting of a film, a hose, a tube, a bottle and a tank.

12. The multilayer shaped article as claimed in claim 11, which is a fuel pipe tube or hose of an automobile.
